# EUROPÄISCHE PATENTSCHRIFT

(11) **EP 1 728 680 B1**
(45) Veröffentlichungstag und Bekanntmachung des Hinweises auf die Patenterteilung: **07.05.2008**
(21) Anmeldenummer: 06010358.7
(22) Anmeldetag: 19.05.2006
(51) Int. Cl.: B60Q 1/00, F21S 8/10

(54) **Beleuchtungseinrichtung für ein Kraftfahrzeug**
Lighting device for vehicle
Dispositif d'éclairage pour véhicule

(30) Priorität: 03.06.2005 DE 102005025481
(43) Veröffentlichungstag der Anmeldung: 06.12.2006
(73) Patentinhaber: AUDI AG, 85045 Ingolstadt (DE)
(72) Erfinder: Huhn, Wolfgang, 85084 Reichertshofen (DE); Hofbauer, Manfred, 85092 Kösching (DE)
(74) Vertreter: Thielmann, Frank

(56) Entgegenhaltungen:
- EP-A- 1 344 975
- DE-A1- 10 030 362
- DE-A1- 19 652 569
- GB-A- 256 473
- US-A- 3 949 214
- US-A1- 2003 223 246
- PATENT ABSTRACTS OF JAPAN Bd. 1998, Nr. 14, 31. Dezember 1998 (1998-12-31) & JP 10 261303 A (TOYOTA MOTOR CORP), 29. September 1998 (1998-09-29)

## Beschreibung

Die Erfindung betrifft eine Beleuchtungseinrichtung für ein Kraftfahrzeug mit wenigstens einem Scheinwerfer, umfassend eine in einem Reflektor angeordnete Lichtquelle, eine vor dem Reflektor angeordnete Blende zur Bestimmung der Hell-Dunkel-Grenze und eine vor der Blende angeordnete Linsenoptik.

Zur Erhöhung der Fahrsicherheit ist es weit verbreitet, dass Kraftfahrzeuge auch tagsüber mit eingeschaltetem Licht fahren. Dieses sogenannte Tagfahrlicht unterliegt gewissen gesetzlichen Normen, die insgesamt ein schwächeres und weniger fokussiertes Licht erlauben.

Meist wird das Tagfahrlicht durch simples Einschalten des Abblendlichts realisiert. Diese Art von Tagfahrlicht ist jedoch als nachteilhaft anzusehen. Da nur die Absicherung nach vorne gewünscht ist, sind weitere Lichtquellen der Beleuchtungseinrichtung, wie Rücklichter, Kennzeichenbeleuchtung, Beleuchtung der Instrumententafel und dergleichen, unnötigerweise auch eingeschaltet. Dadurch verschleißen die Lampen sehr viel schneller, und es wird unnötig viel Energie verbraucht. Selbst wenn über eine spezielle Schaltung nur das Abblendlicht aktiv ist, so hat sich doch gezeigt, dass die Lebensdauer der entsprechenden Lichtquelle sich dadurch extrem verkürzt. Weiterhin ist dieses Licht unnötigerweise gerichtet.

Daher wurde der Einbau separater Tagfahrleuchten vorgeschlagen. Diese benötigen jedoch, da eine zusätzliche Lampe eingebaut werden muss, sehr viel - praktisch kaum verfügbaren - Platz in der Fahrzeugfront. Außerdem entstehen durch eine solche zusätzliche Leuchte meist beachtliche Kosten.

Die EP 1 344 975 offenbart einen Fahrzeugscheinwerfer mit einer Zusatzlichtquelle im unteren Bereich, die zwischen der Blende und der Linsenoptik angeordnet ist.

Der Erfindung liegt daher die Aufgabe zugrunde, eine Beleuchtungseinrichtung anzugeben, in der auf einfache, kostengünstige Weise und unabhängig von weiteren Lichtquellen der Beleuchtungseinrichtung schaltbar ein Tagfahrlicht integriert ist.

Zur Lösung dieser Aufgabe ist bei einer Beleuchtungseinrichtung der eingangs genannten Art erfindungsgemäß vorgesehen, dass zwischen der Blende und der Linsenoptik wenigstens ein Leuchtmittel, über das unabhängig vom Betrieb der Lichtquelle Licht abgebbar ist, vorgesehen ist.

Eine derartige Verwirklichung des Tagfahrlichtes ist besonders vorteilhaft, da kein zusätzlicher Bauraum erforderlich ist. Erfindungsgemäß wird nämlich einfach der "tote" Bereich zwischen Linsenoptik und Blende genutzt, der ohnehin keinen Beitrag zur Lichtverteilung der Lichtquelle liefert. Damit ist eine sehr hohe Integrationsdichte mit kostengünstiger Umsetzung verbunden. Bei Verwendung der erfindungsgemäßen Beleuchtungseinrichtung sind keine weiteren Elemente in der Fahrzeugfront erforderlich. Gegenüber den Lösungen, die das Abblendlicht verwenden, wird vorteilhafterweise eine beachtliche Menge an Energie eingespart, und die Lampenlebensdauer aller anderen Lichtquellen, die bei Abblendlicht im Betrieb sind, wird verlängert. Dies wird insbesondere durch den erfindungsgemäßen unabhängigen Betrieb des zusätzlich vorgesehenen Leuchtmittels erreicht.

Zweckmäßigerweise kann das Leuchtmittel eine Glühbirne oder wenigstens eine LED sein. Diese Bauelemente sind günstig und leicht zu montieren bzw. zu integrieren.

Alternativ kann das Leuchtmittel wenigstens einen zwischen der Blende und der Linsenoptik endenden Lichtleiter mit einer zugeordneten Lichtquelle umfassen. Die Lichtquelle muss hierbei vorteilhafterweise nicht im Scheinwerfer selber angeordnet sein. In besonders vorteilhafter Ausgestaltung können der oder die Lichtleiter bezüglich der Linsenoptik ausgerichtet sein. Damit ist auf einfache Art und Weise möglich, die gesamte Lichtstärke in Richtung der Linsenoptik zu lenken, um die Anforderungen an ein Tagfahrlicht zu erfüllen.

Mit besonderem Vorteil kann die Blende auf der dem Leuchtmittel zugewandten Seite mit reflektierendem Material beschichtet oder reflektierend ausgebildet sein. Zusätzlich dazu kann die Blende auf der dem Leuchtmittel zugewandten Seite in einer das Licht des Leuchtmittels fokussierenden und/oder defokussierenden Weise ausgeformt sein. Durch eine solche Ausbildung der Blende kann ein schwächeres Leuchtmittel zur Erzeugung derselben Lichtstärke eingesetzt werden. Zudem kann die Lichtverteilung so angepasst werden, dass das Kraftfahrzeug von anderen Verkehrsteilnehmern ideal erkennbar ist.

Vorzugsweise ragt das Leuchtmittel nicht über die Kante der Blende hinaus in den Strahlengang des Lichtes der Lichtquelle ein. Dadurch wird wirklich nur der ohnehin nicht verwendete Bereich zwischen Linsenoptik und Blende vorteilhaft genutzt, so dass keine Beeinträchtigung der Lichtverteilung der Lichtquelle auftreten kann.

Die in dem Reflektor angeordnete Lichtquelle kann beispielsweise ein Halogenleuchtmittel sein. Gerade bei diesen, ohnehin schon recht teuren Lampen, ist eine simple, kostengünstige Konstruktion zur Erlangung des Tagfahrlichtes sinnvoll.

In der Beleuchtungseinrichtung kann wenigstens eine weitere externe oder im Scheinwerfer angeordnete Lichtquelle vorgesehen sein, wobei in diesem Fall durch das Leuchtmittel unabhängig vom Betrieb der wenigstens einen weiteren Lichtquelle Licht abgebbar ist. Beim Tagfahrlicht ist nur der Betrieb des Leuchtmittels notwendig, welches das Tagfahrlicht abstrahlt. Daher ist es zweckmäßig, wenn dieses Leuchtmittel unabhängig von allen anderen etwaigen Lichtquellen, wie z. B. der Kennzeichenbeleuchtung, den Rücklichtern und dergleichen, zuschaltbar ist. Mit anderen Worten sind bei eingeschaltetem Tagfahrlicht nur die erfindungsgemäßen Leuchtmittel in Betrieb.

In einer weiteren Ausführungsform kann die Lichtquelle ein Abblendlicht sein. In einen solchen Abblendscheinwerfer lässt sich aufgrund der ohnehin vorhandenen Blende das zusätzliche Leuchtmittel vorteilhaft einbauen.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipskizze eines Scheinwerfers gemäß einem ersten Ausführungsbeispiel der vorliegenden Erfindung, und
- Fig. 2: eine Prinzipskizze eines Scheinwerfers gemäß einem zweiten Ausführungsbeispiel der vorliegenden Erfindung.

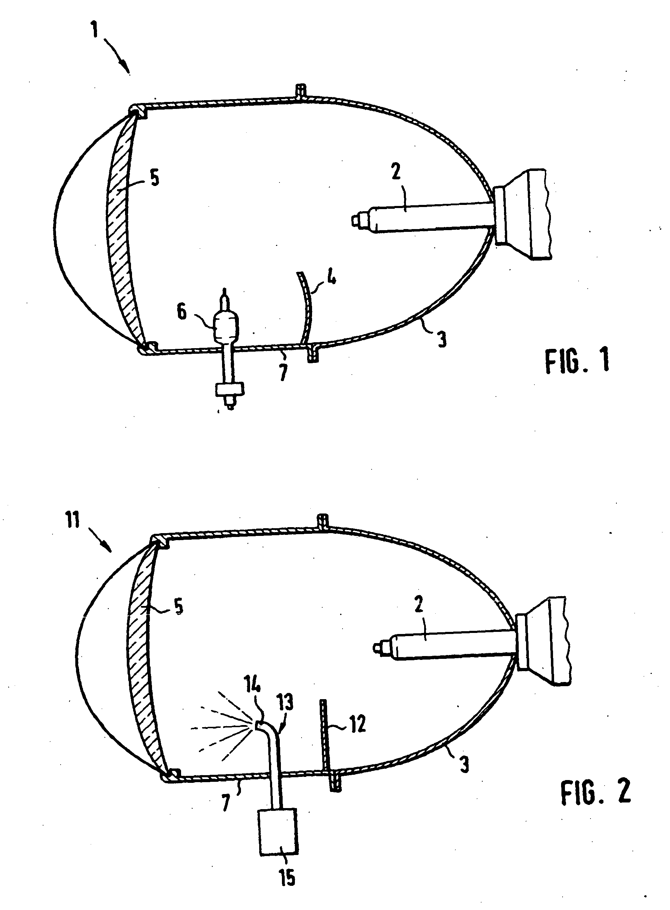

Fig. 1 zeigt einen Scheinwerfer 1, der Teil einer erfindungsgemäßen Beleuchtungseinrichtung ist. Er umfasst eine Lichtquelle 2, die zentral in einem Reflektor 3 angeordnet ist. Vor diesem Reflektor ist eine Blende 4 angeordnet, die die Hell-Dunkel-Grenze des von der Lichtquelle 2 ausgesandten Lichtes bestimmt. Weiter geeignet fokussiert wird das Licht der Lichtquelle 2 durch eine Linsenoptik 5. Erfindungsgemäß ist nun in dem für die Ausgestaltung des Ausleuchtbereiches und die Lichtstärke der Lichtquelle 2 nicht relevanten Bereich zwischen der Blende 4 und der Linsenoptik 5 ein weiteres Leuchtmittel vorgesehen, hier eine Glühbirne 6. Diese kann auf einfache Art und Weise an bzw. durch ein Gehäuse 7 des Scheinwerfers 1 befestigt werden. Die Blende 4 ist auf der der Glühbirne 6 zugewandten Seite reflektierend ausgebildet, wofür sie mit einem reflektierenden Material, z. B. einem Metall, beschichtet ist. Dadurch wird das Licht der Glühbirne 6, welches normalerweise in den hinteren Bereich des Scheinwerfers 1 gestrahlt worden wäre und dort verloren gehen würde, nach vorne reflektiert und trägt so zur Helligkeit des Tagfahrlichts der Glühbirne 6 bei. Die Blende 4 ist außerdem in ihrer Form angepasst, um eine geeignete Fokussierung und/oder Defokussierung des Lichtes der Glühbirne 6 zu ermöglichen. Anstatt der reflektierenden Beschichtung der Blende 4 könnte auch vorgesehen sein, dass diese aus Metall besteht und z.B. poliert ist.

Die Glühbirne 6 ist unabhängig von allen anderen Lichtquellen des Scheinwerfers oder der sonstigen Beleuchtungseinrichtung zu- oder abschaltbar. Vorteilhafterweise sind jedoch bei mehreren mit Tagfahrlicht ausgerüsteten Scheinwerfern die entsprechenden Leuchtmittel, hier die Glühbirnen 6, gemeinsam ein- und ausschaltbar, aber weiterhin natürlich unabhängig von allen anderen Lichtquellen der Beleuchtungseinrichtung, die nicht der Erzeugung von Tagfahrlicht dienen.

Fig. 2 zeigt eine weitere Ausführungsform eines erfindungsgemäßen Scheinwerfers 11. Dieser umfasst - genau wie der Scheinwerfer 1 - baugleiche Elemente, nämlich eine Lichtquelle 2, einen Reflektor 3, eine Linsenoptik 5 und ein Gehäuse 7. Die Blende 12 ist hier als eine unbeschichtete, nicht speziell ausgeformte Blende ausgebildet. Statt der Glühbirne 6 ist nun ein Lichtleiter 13 durch eine Öffnung in dem Gehäuse 7 geführt. Das Ende 14 des Lichtleiters 13 ist im Bezug auf die Linsenoptik ausgerichtet, so dass nur wenig Streulicht in die hinteren Bereiche des Scheinwerfers 11 verloren geht. Daher muss die Blende 12 auch nicht speziell reflektierend ausgebildet sein. Dem Lichtleiter 13 ist eine zugeordnete Lichtquelle 15, beispielsweise ein LED-Array, zugeordnet, die den Lichtleiter 13 mit Licht versorgt. Wenngleich Fig. 2 nur einen Lichtleiter zeigt, kann selbstverständlich auch ein Lichtleiterbündel in den Scheinwerfer geführt sein.

Auch die Lichtquelle 15 ist wie die Glühbirne 6 unabhängig von allen anderen Lichtquellen oder nur gemeinsam mit anderen Tagfahrlichtquellen schaltbar.

Weder die Glühbirne 6 in Fig. 1 noch der Lichtleiter 13 in Fig. 2 ragen über die Blende hinaus, so dass der Strahlengang der Lichtquelle 2 von der baulichen Veränderung unberührt bleibt.

## Patentansprüche

1. Beleuchtungseinrichtung für ein Kraftfahrzeug mit wenigstens einem Scheinwerfer (1,11), umfassend eine in einem Reflektor (3) angeordnete Lichtquelle (2), eine vor dem Reflektor (3) angeordnete Blende (4,12) zur Bestimmung der Hell-Dunkel-Grenze und eine vor der Blende (4,12) angeordnete Linsenoptik (5), wobei zwischen der Blende (4,12) und der Linsenoptik (5) wenigstens ein Leuchtmittel (6,13), über das unabhängig vom Betrieb der Lichtquelle (2) Licht abgebbar ist, vorgesehen ist,
**dadurch gekennzeichnet,**
**dass** das Leuchtmittel (6,13) wenigstens einen zwischen der Blende (4,12) und der Linsenoptik (5) endenden Lichtleiter (13) mit einer zugeordneten Lichtquelle (15) umfasst und der oder die Lichtleiter (13) bezüglich der Linsenoptik (5) ausgerichtet sind.

2. Beleuchtungseinrichtung nach Anspruch 1,
**dadurch gekennzeichnet,**
**dass** die Blende (4,12) auf der dem Leuchtmittel (6,13) zugewandten Seite mit reflektierendem Material beschichtet oder reflektierend ausgebildet ist.

3. Beleuchtungseinrichtung nach einem der vorangehenden Ansprüche,
**dadurch gekennzeichnet,**
**dass** die Blende (4,12) auf der dem Leuchtmittel (6,13) zugewandten Seite in einer das Licht des Leuchtmittels (6,13) fokussierenden und/oder defokussierenden Weise ausgeformt ist.

4. Beleuchtungseinrichtung nach einem der vorangehenden Ansprüche,
**dadurch gekennzeichnet,**
**dass** das Leuchtmittel (6,13) nicht über die Kante der Blende (4,12) hinaus in den Strahlengang des Lichtes der Lichtquelle (2) einragt.

5. Beleuchtungseinrichtung nach einem der vorangehenden Ansprüche,
**dadurch gekennzeichnet,**
**dass** die in dem Reflektor (3) angeordnete Lichtquelle (2) ein Halogenleuchtmittel ist.

6. Beleuchtungseinrichtung nach einem der vorangehenden Ansprüche,
**dadurch gekennzeichnet,**
**dass** wenigstens eine weitere externe oder im Scheinwerfer (1,11) angeordnete Lichtquelle vorgesehen ist und durch das Leuchtmittel (6,13) unabhängig vom Betrieb der wenigstens einen weiteren Lichtquelle Licht abgebbar ist.

7. Beleuchtungseinrichtung nach einem der vorangehenden Ansprüche,
**dadurch gekennzeichnet,**
**dass** die Lichtquelle (2) ein Abblendlicht ist.

## Claims

1. Lighting device for a vehicle having at least one headlamp (1, 11), comprising a light source (2) positioned in a reflector (3), a lens aperture (4, 12) positioned in front of the reflector (3) to determine the light/dark boundary, and a lens (5) positioned in front of the lens aperture (4, 12), wherein at least one illuminant (6, 13) is provided between the lens aperture (4, 12) and the lens (5), by means of which light can be emitted regardless of whether the light source (2) is operating, **characterised in that** the illuminant (6, 13) comprises at least one optical fibre (13) terminating between the lens aperture (4, 12) and the lens (5) and having an associated light source (15) and that the optical fibre(s) (13) are oriented in relation to the lens (5).

2. Lighting device according to claim 1, **characterised in that** the lens aperture (4, 12) on the side facing the illuminant (6, 13) is coated with a reflective material or is designed to be reflective.

3. Lighting device according to one of the preceding claims, **characterised in that** the lens aperture (4, 12) on the side facing the illuminant (6, 13) is shaped in such a way as to focus and/or defocus the light from the illuminant (6, 13).

4. Lighting device according to one of the preceding claims, **characterised in that** the illuminant (6, 13) does not project beyond the edge of the lens aperture (4, 12) into the beam path of the light from the light source (2).

5. Lighting device according to one of the preceding claims, **characterised in that** the light source (2) positioned in the reflector (3) is a halogen illuminant.

6. Lighting device according to one of the preceding claims, **characterised in that** at least one further external light source or light source positioned inside the headlamp (1, 11) is provided and light can be emitted by the illuminant (6, 13) regardless of whether the at least one further light source is operating.

7. Lighting device according to one of the preceding claims, **characterised in that** the light source (2) is a dipped-beam headlamp.

## Revendications

1. Dispositif d'éclairage pour véhicule automobile avec au moins un phare (1, 11), comprenant une source lumineuse (2) disposée dans un réflecteur (3), un écran (4, 12) disposé devant le réflecteur (3) pour déterminer la limite clair-obscur et une optique de lentille (5) disposée devant l'écran (4, 12), au moins un moyen d'éclairage (6, 13), par le biais duquel de la lumière peut être émise indépendamment du fonctionnement de la source lumineuse (2), étant prévu entre l'écran (4, 12) et l'optique de lentille (5),
**caractérisé en ce**
**que** le moyen d'éclairage (6, 13) comprend au moins un guide de lumière (13) se terminant entre l'écran (4, 12) et l'optique de lentille (5) avec une source lumineuse associée (15) et le ou les guides de lumière(13) sont orientés par rapport à l'optique de lentille (5).

2. Dispositif d'éclairage selon la revendication 1,
**caractérisé en ce**
**que** l'écran (4, 12) est revêtu de matériau réfléchissant ou réalisé de manière réfléchissante sur le côté tourné vers le moyen d'éclairage (6, 13).

3. Dispositif d'éclairage selon l'une quelconque des revendications précédentes,
**caractérisé en ce**
**que** l'écran (4, 12) est formé sur le côté tourné vers le moyen d'éclairage (6, 13) de manière à focaliser et/ou défocaliser la lumière du moyen d'éclairage (6, 13).

4. Dispositif d'éclairage selon l'une quelconque des revendications précédentes,
**caractérisé en ce**
**que** le moyen d'éclairage (6, 13) ne pénètre pas dans la trajectoire du faisceau de lumière de la source lumineuse (2) au-delà du bord de l'écran (4, 12).

5. Dispositif d'éclairage selon l'une quelconque des revendications précédentes,
**caractérisé en ce**
**que** la source lumineuse (2) disposée dans le réflecteur (3) est un moyen d'éclairage à halogène.

6. Dispositif d'éclairage selon l'une quelconque des revendications précédentes,
**caractérisé en ce**
**qu'**au moins une autre source lumineuse externe ou disposée dans le phare (1, 11) est prévue et de la lumière peut être émise par le moyen d'éclairage (6, 13) indépendamment du fonctionnement de l'au moins une autre source lumineuse.

7. Dispositif d'éclairage selon l'une quelconque des revendications précédentes,
**caractérisé en ce**
**que** la source lumineuse (2) est un feu de croisement.
